**Europäisches Patentamt**

**European Patent Office**

**Office européen des brevets**

(19)

(11) Publication number : **0 403 456 B1**

(12)
# EUROPEAN PATENT SPECIFICATION

(45) Date of publication of patent specification :
**04.10.95 Bulletin 95/40**

(51) Int. Cl.⁶ : **H04L 9/00,** H04L 9/06, G09C 1/00

(21) Application number : **90850188.5**

(22) Date of filing : **18.05.90**

(54) Encryption circuit.

(30) Priority : **16.06.89 SE 8902165**

(43) Date of publication of application :
**19.12.90 Bulletin 90/51**

(45) Publication of the grant of the patent :
**04.10.95 Bulletin 95/40**

(84) Designated Contracting States :
**BE CH DE FR GB LI**

(56) References cited :
**DE-A- 3 631 992**
**US-A- 4 274 085**
**US-A- 4 771 462**

(56) References cited :
**D.E. ROBLING DENNING** ˝Cryptography and Data Security˝ **ADDISON-WESLEY PUBLISHING COMPANY, Reading, Massachusetts pages 92-98**

(73) Proprietor : **TELIA AB**
**Marbackagatan 11**
**S-123 86 Farsta (SE)**

(72) Inventor : **Ohlson, Stefan**
**Kragstalundsvägen 82**
**S-186 51 Vallentuna (SE)**

(74) Representative : **Karlsson, Berne**
**Telia Research AB,**
**Koncernpatent**
**S-136 80 Haninge (SE)**

## Description

FIELD OF THE INVENTION

The invention relates to an encryption circuit constructed in gate matrix technology. The circuit will encrypt data according to the American DES (Data Encryption Standard).

To encrypt digital information is today of highly topical interest. There are more and more data bases and they are frequently accessed via the telecommunication network together with a modem (modulator/demodulator, adaptor between digital signals and telecommunication signals). Enterprises like banks, petrol stations and other business establishments transmit information between different departments. Automatic credit card machines require communication with banks or financial companies. All these activities and similar ones are growing in volume and there is an increasing requirement to be able to encrypt this sensitive information.

The encryption algorithm which is of most interest is called DES, Data Encryption Standard. DES originated with IBM in the seventies and was raised to a standard by the National Bureau of Standards (NBS) organization in the USA in 1977. Suitable references are "Cryptography and data security" by D.E.R. Denning (Adisson-Wesley 1982) or the DES Standard Data Encryption Algorithm No. 1 (DEA 1) by the international standardization commission.

PRIOR ART

There are at least two or three circuit products on the market which have the DES algorithm in their circuit program. However, none of these have the pin configuration of the circuit in a standardized manner. The lack of standards makes it complicated to install the technology in existing equipment, for example modems.

US-A-4 274 085 discloses a DES encryption/decryption circuit capable of operating in a plurality of modes. The circuit is implemented on a single chip or family of chips. However, it is not contemplated that the pin configuration of the circuit should functionally correspond to a standard chip pin configuration, e.g. of a random access memory circuit.

According to the invention, an existing standard, preferably the pin configuration of a random access memory (RAM), is utilized. This memory circuit is produced by a number of manufacturers, for example Toshiba, whose circuit is designated PC 5564. Exchanging a memory circuit for an encryption circuit provides the possibility to communicate with encrypted data in the data system.

SUMMARY OF THE INVENTION

The invention thus provides an encryption circuit constructed in gate matrix technology, the circuit being integrated on a chip and the pin configuration of the circuit corresponding to the pin configuration of a memory circuit, preferably a random access memory of the standard type (RAM).

Other features of the invention are specified in the subsequent patent claims.

BRIEF DESCRIPTION OF THE DRAWINGS

The invention will now be described with reference to the attached drawings, in which:
Figure 1 shows diagrammatically a computer system with inbuilt encryption circuit.
Figure 2 shows an example of a standard memory circuit and its pin configuration.
Figure 3 shows a simplified arrangement for ECB block encryption.
Figure 4 is a flow diagram of the data flow when encrypting with the DES algorithm in ECB mode.
Figure 5 is a flow diagram for the generation of the function f.
Figure 6 is a flow diagram of the sub-key generation.
Figure 7 is a diagram of bit circulation in sub-key generation.
Figure 8 is a compressed flow diagram of the data flow in the register corresponding to Figure 4.
Figure 9 is a block diagram of the entire encryption circuit as it appears to the rest of the computer system.
Figure 10 is a memory map of the encryption circuit.

DETAILED DESCRIPTION OF EMBODIMENTS OF THE INVENTION

The invention provides an encryption circuit in gate matrix technology. It should be able to carry out encryption and decryption according to the DES standard in the so-called ECB mode. The encryption algorithm is described in greater detail below. A main aim of the invention is that the encryption circuit shall be exchange-

2

able for an 8 kbyte random access memory of a standard type, such as Toshiba 5564 or corresponding circuit. This is a memory circuit which is frequently used in electronic equipment. Other designations are, for example, 2064, 6264, 4364 and 8264.

That the encryption circuit should be exchangeable implies that the electrical connections correspond to the specification of the memory circuit. The pin arrangement must correspond and the responses on reading and writing should occur equivalently. The encryption circuit should be designed in such a manner that the original 8 kbyte block is retained to the greatest possible extent. It may be difficult to meet the requirement with an internal memory in the same circuit. In this case, a decoding logic will be included for a future such memory, internally or externally. The circuit will thus generate the CS, Chip Select, signal which can be used by an internal RAM. In addition, CS shall be taken to pin 1 of the encryption circuit for any "piggy-back" coupling. A memory circuit is therefore soldered above or under the encryption circuit and take this CS signal from pin 1. Pin 1 is not used by the memory circuit and thus becomes an output for the encryption circuit. In many applications, the loss of a memory circuit does not play a large role. The encryption part will occupy a suitable number of memory cells from the highest address and downward.

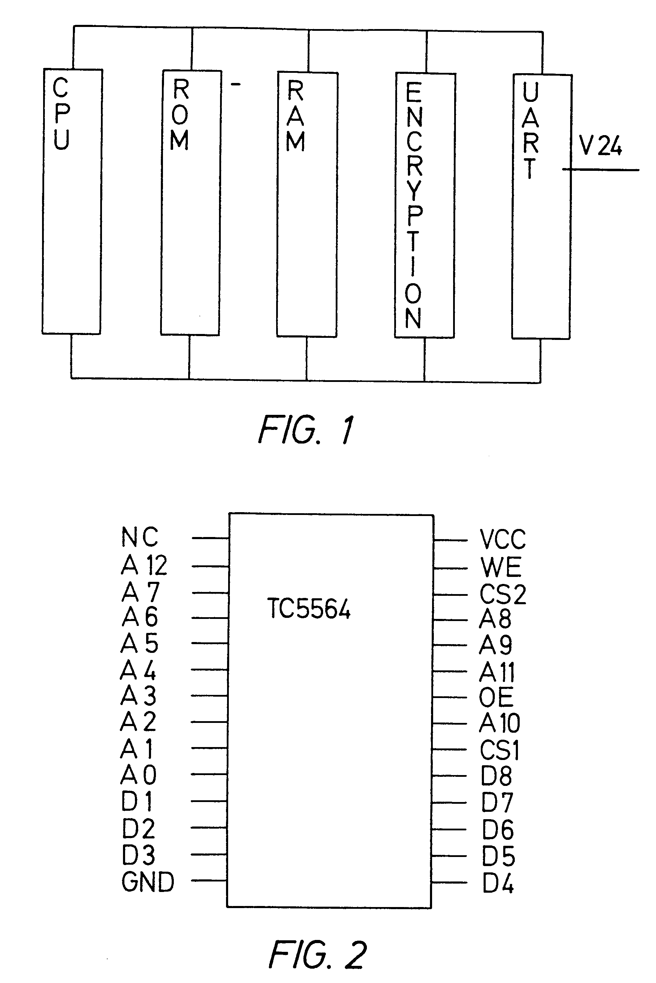

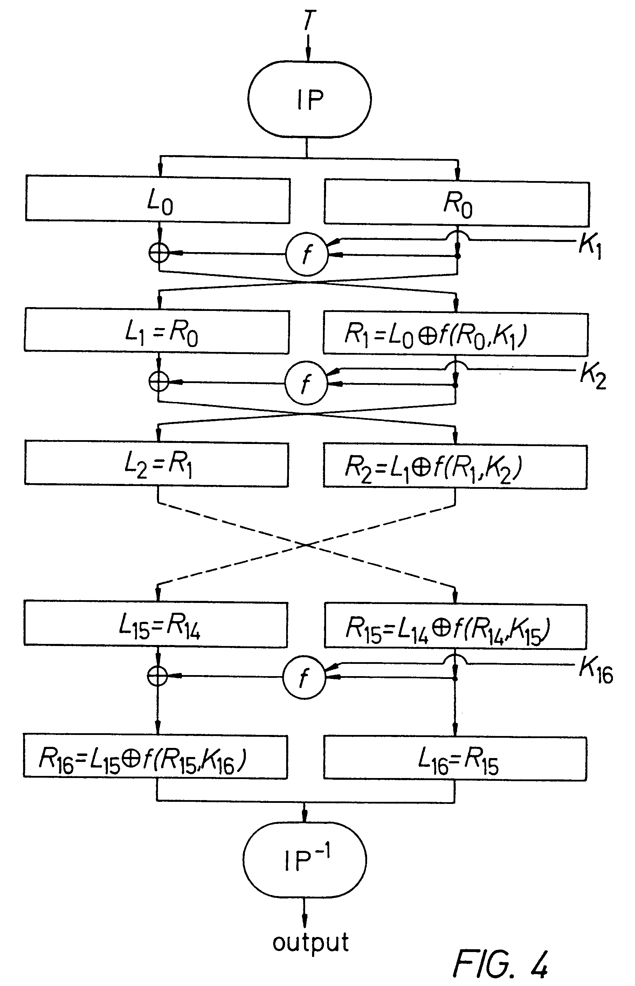

It should be possible for an imagined computer system with encryption to be an ordinary system which has been in operation for some time. By exchanging a memory circuit for an encryption circuit, the system is provided with the possibility of communicating with encrypted data. A typical application is communication between computers. Figure 1 shows such a system in which a memory and CPU block and communication block can be seen. In the operating system or application program, rutines for data flow must naturally be modified. The normal data flow to communication circuits is then diverted so that data take the path via the encryption circuit. To carry out encryption with the aid of software would certainly make the program section into a bottleneck which retards the data flow. A hardware circuit, on the other hand, carries out the encryption extremely quickly with the consequence that the data rate is not appreciably retarded.

The circuit will therefore be exchangeable for a random access memory RAM. Figure 2 shows an example of such a circuit, Toshiba 5564. The memory which is for 8 kbytes and has 28 pins is quite usual in systems.

Before considering the circuit design, the encryption algorithm must be described. DES (Data Encryption Standard) was thus developed by IBM in the seventies and has since become a standard with the Federal Authorities in the USA. DES also has the prerequisites for being used in the private sector, chiefly in the banking world, and is expected to spread internationally.

The algorithm is intended to be implemented in hardware. Encryption and decryption are carried out equally easily with a relatively small transposition in the logic. According to the standard, there are four different ways for encrypting/decrypting: ECB Electronic Code Book, CBS Cipher Block Chaining, CFB Cipher Feedback and OFB Output Feedback. The first basic variant is called ECB. This is where the encryption/decryption itself is carried out. The other variants require ECB as a basis. CBC, CFB and OFB all use ECB plus additional logic such as EXOR gates and shift registers for achieving their specific characteristics. A number of circuits with the DES algorithm are found on the market, for example Motorola MC6859, Zilog Z8068 and so forth. The embodiment of the invention described here contains only the fundamental ECB but, naturally, the other variants can also be constructed by an expert.

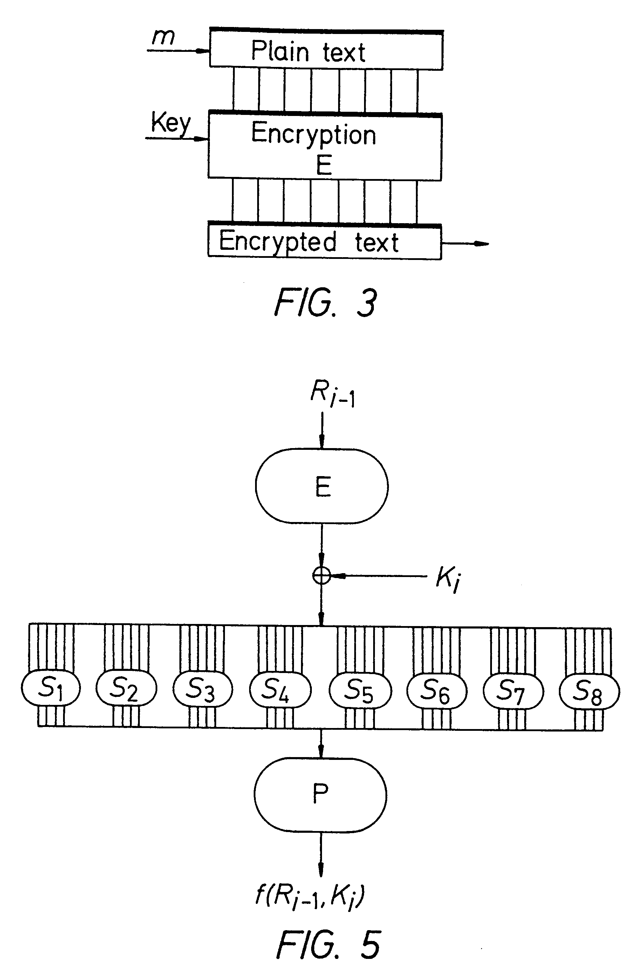

ECB encrypts 64-bit data block by block with a key of 64 bits. Figure 3 shows diagrammatically the encrypting operation. A block m of plain text is encrypted with the aid of a key. Since the encryption algorithm itself if well known, it is only the key which will be kept secret by the user. The key also consists of 64 bits but has 8 parity bits which are not included in the algorithm. 56 bits remain for the key. The result of the encryption is an encrypted block of 64 bits. The decryption follows the same principle as the encryption by transposition of so-called sub-keys. The sub-keys are calculated with the aid of the key. In principle, ECB is a translation table for a data word of 64 bits and a key of 56 bits.

Figure 4 shows a flow diagram for the data flow during encryption. A plain text block T (64 bits) is first subjected to a fixed permutation IP. Here all bits are cross-coupled in accordance with a fixed pattern with the aid of tables. The result, still 64 bits, is thereafter divided into a 32-bit left block L zero and a right block R zero. This is followed by 16 similar steps. Left and right blocks are numbered continuously from zero (start block) to 16 with index i. Each block gets a new value as follows:

$$L_i = R_{i-1}$$
$$R_i = L_i^{-1} \oplus f(R_1, K_1) \oplus = 32 \text{ - bit exor function}$$

As can be seen, the left block obtains the previous value from the right block. The right block gets new values through the exor function on the left block and a function f. The function f is performed with a right block and a sub-key value $K_i$ as input signals. The sub-keys $K_i$ will be described later.

Everything is carried out 16 times with a new sub-key each time. The blocks R16 and L16 are combined by linking them to form a 64-bit word. The blocks have been changed over but they are still generated in accordance with the above expression. Finally, a permutation $IP^{-1}$ is carried out which is the inverse of the first one, IP. This is necessary so that the algorithm can both encrypt and decrypt. The value after IP$^{-1}$ is the encrypted text and contains 64 bits.

Figure 5 shows how the function f is calculated. There are two inputs and one output. The buses $R_{i-1}$ of 32 bits and $K_i$ of 48 bits are input signals. f ($R_{i-1}$, $K_i$) with 32 bits is the output signal. First there is an expansion E of the 32-bit R value to a 48-bit word by 16 of the 32 bits in R being doubled in accordance with a particular pattern with the aid of table look-up. After that, the result from the expansion is added by means of the exor function bit by bit to a 48-bit sub-key K. In this way, 8 pieces of 6-bit addresses are obtained for the same amount of tables, $S_1$ to $S_8$. Each table has an output of several bits and a 6-bit address input. The tables are named S-boxes and here the values are found as 4 bits (0-15). The S-boxes are quite simply fixed stores. Out of each box 4 bits are therefore obtained which with 8 S-boxes and linking-together provide a 32-bit word. The word is subjected to a fixed permutation P according to the table look-up. The result becomes a 32-bit word which constitutes f ($R_{i-1}$, $K_i$).

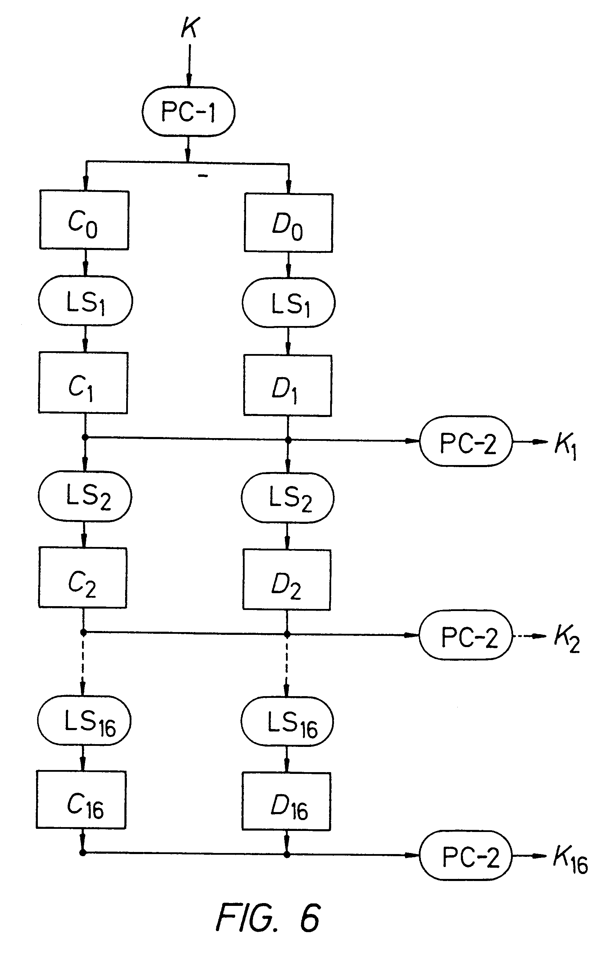

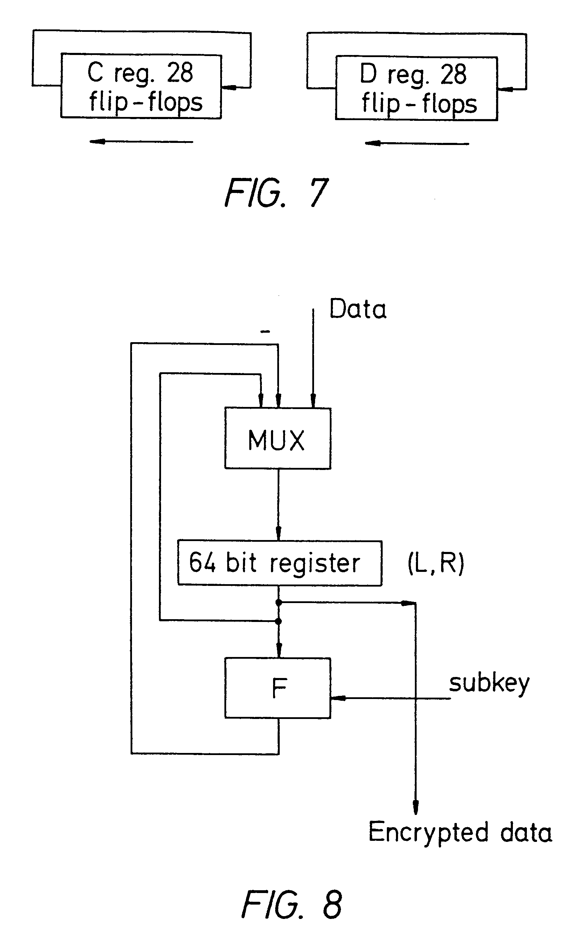

Figure 6 shows the generation of the 16 sub-keys. The original key K of 64 bits is subjected to a fixed permutation PC-1 (permuted choice 1) with the aid of a table. There, the parity bits are extracted and the remaining 56 bits are changed over. The parity bits make up every 8th bit in the original 64-bit word. The 56 bits are further divided into two halves of 28 bits $C_0$, $D_0$. Sub-keys $K_1$ to $K_{16}$ will be formed and this is done with left-hand rotation of C and D as shows in Figure 7. The number of shifts, rotations which will be carried out is determined by a table. After $K_{16}$ has been shifted forward (28 shifts), the original value according to PC-1 is generated. Each result of the shifts in C and D is linked and subjected to a fixed permutation in PC-2. Since the number of bits is 2 times 28 = 56 in C, D, and $K_i$ will consist of 48 bits, certain bits must be discarded in PC-2. All bits in C, D will, nevertheless, be used sometime by PC-2 due to the rotation.

During the decryption, the same algorithm is used except that instead of using the sub-keys $K_1$-$K_{16}$ in the above-mentioned order, they are changed over into the order $K_{16}$-$K_1$. However, this creates problems in the generation of the sub-keys. The time to first take out $K_{16}$ and then $K_{15}$ and so forth becomes very long if only left shifts are carried out. This is because the entire shift table will be carried out from top to bottom. By introducing right shifts with a start from the bottom, the time consumed becomes the same for encryption and decryption. However, the shift column must be raised up one step. Sub-key $K_{16}$ is then obtained without any shift and $K_1$ after 27 right shifts.

According to the invention, however, the implementation is in hardware and then no shifts at all are used. This is done entirely combinatorily without adding any shift registers, as will be described below.

The text following describes how the invention implements the execution of the encryption algorithm in gate matrix technology. The algorithm itself consists of 16 steps in which new data is generated between each step. It is all carried out with a width of 64 bits and the circuit expenditure would be very high with direct copying of the algorithm. According to the invention, therefore, only one register is used which is loaded 17 times: one time for incoming 64-bit blocks and 16 times for the conversion. Figure 8 shows diagrammatically how the data streams are organized between the register L, R, the function f and a multiplexer MUX. Since all flip-flops in a gate matrix are clocked continuously, the logic must feed back the flip-flop output signals to the inputs as these will not change state. The multiplexer in front of the registers has three different signals to select from: data in, the new data of the algorithm from function f, and the earlier data of the register. The accessible data bus from the environment has 8 bits. Loading and reading of data must therefore occur in eight steps (8 x 8 = 64). The MUX block becomes relatively extensive.

According to the algorithm, a 56-bit key will thus be entered into a register and subjected to a number of shifts of different length before each instant in the encryption. According to the invention, this is achieved by means of a combinatorial block in order to avoid retarding the process with an extra control unit. With a network of 768 transmission gates and control logic, the right bit can be forwarded to the right output, which then replaces the LS block in Figure 6.

The largest proportion of the block is taken up by the so-called S-boxes. There are 8 storage units with six inputs and four outputs in each box. These are built up discretely with the aid of gates and function as fixed memories with given output data for each address.

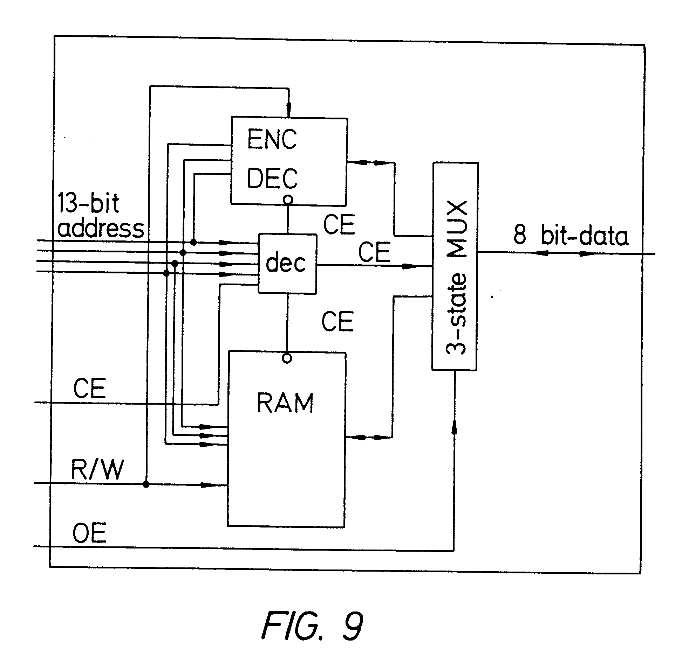

Figure 9 shows how the encryption circuit appears to the computer system. The input signals are a 13-bit address bus, Chip Enable (CE), read/write (R/W) and output enable (OE). The data is output and input on an 8-bit data bus. The RAM block listens to all thirteen bits while the encryption block only uses five bits. A decoder (DEC) puts out the right CE signal to the right block on the basis of the address. OE controls the output buffer (three-state multiplexer) which is two-way for data writing.

To a programmer, the encryption circuit looks like a memory circuit with 32 memory positions of 8 bits each, in other words one byte. The operations which can be carried out are: writing-in of data or key block, respectively, starting encryption or decryption, reading of status and reading of encrypted data. Data, encryption and key block are all of 64 bits each. Since the data bus of the circuit has 8 bits width, the block must be written and read in 8 part blocks. The data bus is used for the block and status but start and the choice of encryption/decryption are controlled by writing with certain address bits set to 1 or 0. The value of the data bus has no significance in this connection. The functions are determined by the address bits $A_0$ to $A_4$.

$A_4$:        0 = dt (data and key) 1 = cnt (control mode)

$A_3$          0 = reg (data register) 1 = key (key register)

$A_{2-0}$       Addresses 0-7. MSB (most significant byte) for data or key block is placed in $A_{2-0}$ = 000 and LSB in 111.

Since $A_4 = 0$, $A_2$-$A_0$ represents the 8 addresses of the part-blocks in the data or key block. $A_3$ has the function of register selection.

The key can be written in but not read out. When the run has been activated, encrypted/decrypted data can be read out after the status has been read.

When $A_4 = 1$, control mode, the command start can be given and the status read.

The following applies for writing:

$$A_4\text{:}1 = cnt \; (control)$$

$$A_3\text{: } x = no \; function$$

$$A_2\text{: } x = no \; function$$

$$A_1\text{: } 1 = run \qquad\qquad 0 = no \; run$$

$$A_0\text{: } 1 = encrypt \qquad 0 = decrypt$$

When reading status, the following applies.

$$\textbf{Data bus}$$

$$A_4\text{:}1 = cnt \; (control)$$

$$A_3\text{: } x = no \; function$$

$$A_2\text{: } x = no \; function$$

$$A_1\text{: } x = no \; function \quad D_1 = 1\text{: } encryption$$
$$D_0 = 0\text{: } decryption$$

$$A_0\text{: } x = no \; function \quad D_0 = 1\text{: } running$$
$$D_0 = 0\text{: } conversion \; clear$$

On $D_0$, status reading provides the answer if the encryption/decryption is clear.

$D_0 = 1$: running (not clear) $D_0 = 0$: clear

$D_1$ shows the mode the circuit is in

$D_1 = 1$: encryption $D_1 = 0$: decryption

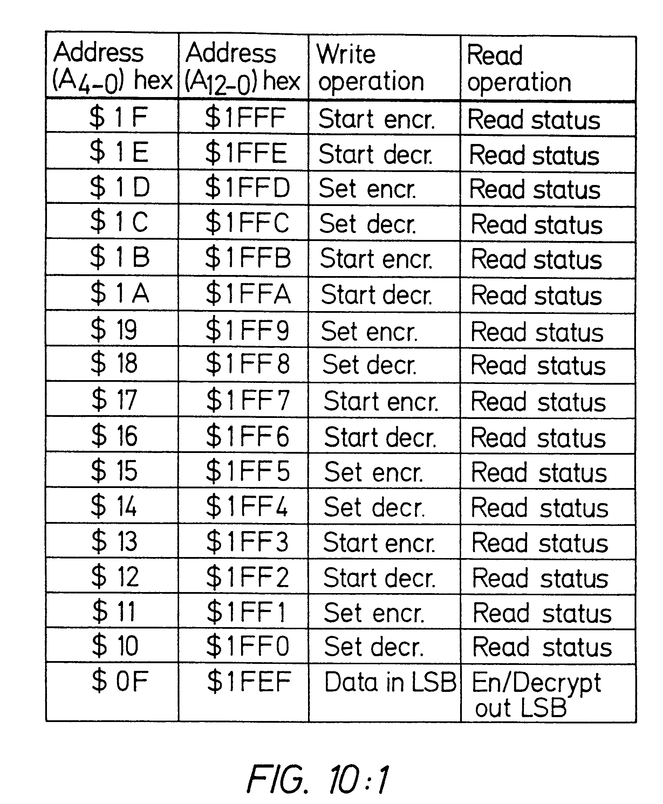

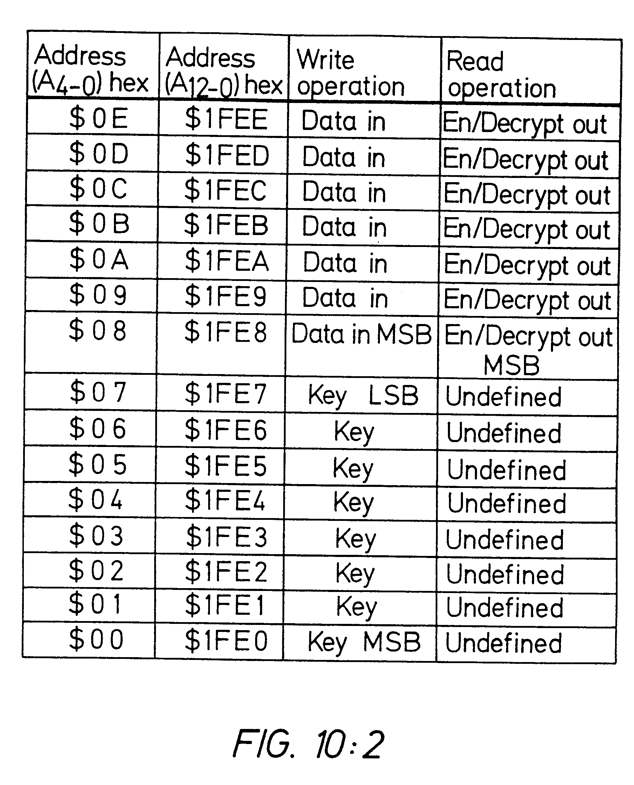

Alternatively, it can all be seen as a memory package with address selection as function control. The table in Figure 10 shows all possible read and write operations the circuit can be subjected to. As can be seen, there are many redundant registers in the memory map. Addresses of interest are those which have been marked in bold lettering. The functions in brackets are duplicates.

EXAMPLE

In practice, a program loop can use the registers in this way:
(One block is encrypted and decrypted, not so realistically)
1. Write-in the key at address $0-7
2. Write-in the data block at address $8-F
3. Write at address $13, = start of encryption, data bus without function
4. Read status address $10 until $D_0 = 0$
5. Read encryption block at address $8-F
6. Write-in encryption block, $8-F (not necessary in this case)
7. Write at address $10 = start of decryption, databus without function

8. Read status

9. Read the decrypted data block $8-F

At this point, the same original block should be obtained.

The absolute addresses for the circuit are obtained by adding $1FE0 to the above addresses. A column with these is also given.

In accordance with the above description, the invention thus provides an encryption circuit with many advantages. According to a first aspect of the invention, the encryption circuit is integrated on one chip and has a pin configuration which corresponds to a standard memory. The encryption circuit can thus be directly placed in the existing equipment in place of a random access memory (RAM). The encryption bit itself only takes up 32 memory positions (bytes) of 8 kbytes (8192). The 32 bytes, however, must be handled by the operating system in such a manner that they are not used as RAM positions. The RAM area itself is not used in any way by the encryption/decryption unit, but instead this may be eliminated if the rest of the system does not require the memory area.

According to a second aspect of the invention, a single data register is used for implementing the 16 steps in the DES algorithm. The 64-bit register is implemented with the aid of the 32 memory positions of 1 byte each. A part of the memory positions is thus redundant. By using a suitable logic comprising, inter alia, a three-state multiplexer which selects one of three buses, a considerable simplification of the circuit is thus made possible.

A third aspect of the invention is that the sub-keys in the DES algorithm are generated with the aid of combinational logic. This technique is very quick and does not result in any delay in the data rate.

Naturally, an expert can think of many embodiments of the present invention. The invention is only limited by the patent claims below.

## Claims

1. Encryption circuit constructed in gate matrix technology, the circuit being integrated on a chip, **characterized** in

that the pin configuration of the circuit corresponds to the pin configuration of a standard memory (RAM, Fig. 2),

that the chip also contains, besides the encryption function, addressable memory positions to essentially the same extent as the said memory circuit,

that the encryption utilizes 32 memory positions each of 8 bits (one byte) of a total of 8 kbytes which are contained in the circuit, in which respect the remaining memory positions can be utilized as a normal random memory (RAM), and

that the encryption utilizes the algorithm according to DES (Data Encryption Standard), in which a register comprising 64 bits of the memory positions of the encryption is successively loaded 17 times: one time for an incoming 64-bit block and 16 times for the conversion, a multiplexer controlling the input signals to the register (Fig. 9).

2. Encryption circuit according to claim 1, **characterized** in that sub-key generation is carried out by a combinatorial block which is integrated on the chip.

## Patentansprüche

1. Verschlüsselungsschaltung, die in Gattermatrixtechnologie ausgeführt ist, wobei die Schaltung auf einem Chip integriert ist, dadurch gekennzeichnet,

daß die Anschlußstiftkonfiguration der Schaltung der Anschlußstiftkonfiguration eines Standardspeichers (RAM, Fig. 2) entspricht,

daß der Chip außer der Verschlüsselungsfunktion weiter adressierbare Speicherstellen in im wesentlichen dem gleichen Umfang wie die genannte Speicherschaltung aufweist,

daß die Verschlüsselung 32 Speicherstellen mit jeweils 8 Bit (einem Byte) von den insgesamt in der Schaltung enthaltenen 8 kByte verwendet, wobei die übrigen Speicherstellen als normaler Speicher mit wahlfreiem Zugriff (RAM) verwendet werden können, und daß die Verschlüsselung den Algorithmus gemäß DES (Data Encryption Standard - Datenverschlüsselungsnorm) verwendet, bei dem ein Register, das 64 Bits der Speicherstellen der Verschlüsselung aufweist, stufenweise 17 mal geladen wird: einmal für einen eingehenden 64-Bit Block und 16 mal für die Umkodierung, wobei ein Multiplexer die Eingangssignale zu den Registern (Fig. 9) steuert.

2. Verschlüsselungsschaltung nach Anspruch 1, dadurch gekennzeichnet, daß die Generierung von Unterschlüsseln durch einen kombinatorischen Block durchgeführt wird, der auf dem Chip integriert ist.

**Revendications**

1. Circuit de chiffrement construit selon une technique de matrice à porte, le circuit étant intégré sur une puce, caractérisé en ce que

    la configuration en broche du circuit correspond à la configuration en broche d'une mémoire standard (RAM, fig. 2),

    la puce contient aussi, en plus de la fonction de chiffrement, des positions de mémoire adressables essentiellement à la même extension que ledit circuit de mémoire,

    le chiffrement utilise 32 positions de mémoire de 8 bits chacune (un octet) d'un total de 8 ko qui sont contenues dans le circuit, par rapport auquel les positions de mémoire restantes peuvent être utilisées comme mémoire vive normale (RAM), et

    le chiffrement utilise l'algorithme selon le DES (Data Encryption Standard), dans lequel un registre comprenant 64 bits des positions de mémoire du chiffrement est successivement chargé 17 fois : une fois pour un bloc d'entrée de 64 bits et 16 fois pour la conversion, un multiplexeur contrôlant les signaux d'entrée au registre (Fig. 9).

2. Circuit de chiffrement selon la revendication 1, caractérisé en ce que la génération de sous-clés est réalisée par un bloc combinatoire qui est intégré sur la puce.

FIG. 1

FIG. 2

FIG. 4

$m$ — Plain text

Key — Encryption E

Encrypted text →

## FIG. 3

$R_{i-1}$

E

$\oplus$ ← $K_i$

$S_1$ $S_2$ $S_3$ $S_4$ $S_5$ $S_6$ $S_7$ $S_8$

P

$f(R_{i-1}, K_i)$

## FIG. 5

$K$

PC-1

$C_0$    $D_0$

$LS_1$    $LS_1$

$C_1$    $D_1$

PC-2 → $K_1$

$LS_2$    $LS_2$

$C_2$    $D_2$

PC-2 → $K_2$

$LS_{16}$    $LS_{16}$

$C_{16}$    $D_{16}$

PC-2 → $K_{16}$

FIG. 6

C reg. 28
flip - flops

D reg. 28
flip - flops

## FIG. 7

Data

MUX

64 bit register    (L,R)

F      subkey

Encrypted data

## FIG. 8

FIG. 9

| Address (A$_{4-0}$) hex | Address (A$_{12-0}$) hex | Write operation | Read operation |
|---|---|---|---|
| $1 F | $1FFF | Start encr. | Read status |
| $1 E | $1FFE | Start decr. | Read status |
| $1 D | $1FFD | Set encr. | Read status |
| $1 C | $1FFC | Set decr. | Read status |
| $1 B | $1FFB | Start encr. | Read status |
| $1 A | $1FFA | Start decr. | Read status |
| $ 19 | $1FF9 | Set encr. | Read status |
| $ 18 | $1FF8 | Set decr. | Read status |
| $ 17 | $1FF7 | Start encr. | Read status |
| $ 16 | $1FF6 | Start decr. | Read status |
| $ 15 | $1FF5 | Set encr. | Read status |
| $ 14 | $1FF4 | Set decr. | Read status |
| $ 13 | $1FF3 | Start encr. | Read status |
| $ 12 | $1FF2 | Start decr. | Read status |
| $ 11 | $1FF1 | Set encr. | Read status |
| $ 10 | $1FF0 | Set decr. | Read status |
| $ 0F | $1FEF | Data in LSB | En/Decrypt out LSB |

*FIG. 10:1*

14

| Address (A$_{4-0}$) hex | Address (A$_{12-0}$) hex | Write operation | Read operation |
|---|---|---|---|
| $0E | $1FEE | Data in | En/Decrypt out |
| $0D | $1FED | Data in | En/Decrypt out |
| $0C | $1FEC | Data in | En/Decrypt out |
| $0B | $1FEB | Data in | En/Decrypt out |
| $0A | $1FEA | Data in | En/Decrypt out |
| $09 | $1FE9 | Data in | En/Decrypt out |
| $08 | $1FE8 | Data in MSB | En/Decrypt out MSB |
| $07 | $1FE7 | Key LSB | Undefined |
| $06 | $1FE6 | Key | Undefined |
| $05 | $1FE5 | Key | Undefined |
| $04 | $1FE4 | Key | Undefined |
| $03 | $1FE3 | Key | Undefined |
| $02 | $1FE2 | Key | Undefined |
| $01 | $1FE1 | Key | Undefined |
| $00 | $1FE0 | Key MSB | Undefined |

FIG. 10:2